(19) Europäisches Patentamt
European Patent Office
Office européen des brevets

(11) **EP 2 790 905 B1**

(12) **FASCICULE DE BREVET EUROPEEN**

(45) Date de publication et mention de la délivrance du brevet:
**31.05.2017 Bulletin 2017/22**

(21) Numéro de dépôt: **12809212.9**

(22) Date de dépôt: **14.12.2012**

(51) Int Cl.:
*B29D 30/06* *(2006.01)*

(86) Numéro de dépôt international:
**PCT/EP2012/075512**

(87) Numéro de publication internationale:
**WO 2013/087826 (20.06.2013 Gazette 2013/25)**

(54) **ELEMENT MOULANT COMPORTANT DES MOYENS DE DECOUPE POUR LE MOULAGE ET LA VULCANISATION D'UNE BANDE DE ROULEMENT D'UN PNEUMATIQUE**

**FORMTEIL MIT SCHNEIDEMITTELN ZUM FORMEN UND VULKANISIEREN EINER REIFENLAUFFLÄCHE**

**MOULDING ELEMENT COMPRISING CUTTING MEANS, FOR MOULDING AND CURING A TREAD OF A TYRE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2011 FR 1161762**

(43) Date de publication de la demande:
**22.10.2014 Bulletin 2014/43**

(73) Titulaires:
- **Compagnie Générale des Etablissements Michelin**
  **63000 Clermont-Ferrand (FR)**
- **MICHELIN Recherche et Technique S.A.**
  **1762 Granges-Paccot (CH)**

(72) Inventeurs:
- **DUVERNIER, Marc**
  **F-63040 Clermont-Ferrand Cedex 9 (FR)**

- **ABAD, Vincent**
  **F-63040 Clermont-Ferrand Cedex 9 (FR)**
- **PERRIN, Frédéric**
  **F-63040 Clermont-Ferrand Cedex 9 (FR)**

(74) Mandataire: **Demaure, Pierre-Yves**
**Manufacture Française**
**des Pneumatiques Michelin**
**23, place des Carmes - Déchaux**
**DGD/PI - F35 - Ladoux**
**63040 Clermont-Ferrand Cedex 9 (FR)**

(56) Documents cités:
EP-A1- 0 510 550    WO-A1-03/089257
WO-A1-2006/069912    GB-A- 1 124 915
US-A- 3 415 923    US-A- 3 432 888
US-A- 4 553 918    US-A- 6 044 882
US-A1- 2007 039 672

**Description**

DOMAINE DE L'INVENTION

La présente invention concerne le domaine des moules pour le moulage et la vulcanisation d'une bande de roulement d'un pneumatique. Plus particulièrement, l'invention concerne les moules aptes à mouler dans la bande de roulement des rainures recouvertes partiellement ou en totalité par une couche de recouvrement additionnelle.

ETAT DE LA TECHNIQUE

Des moules comportant des éléments moulantes pour le moulage de découpures dans la bande de roulement de pneumatiques sont bien connus des documents US4553918, US3415923, US3432888.

Il est également connu de concevoir des pneumatiques dont la bande de roulement comprend différents mélanges de caoutchouc. Le document WO 03089257 divulgue de telles bandes de roulement. Plus particulièrement le document WO 03089257 divulgue une bande de roulement comportant des rainures dont les parois sont recouvertes par une couche de recouvrement. Le matériau constituant cette couche de recouvrement est différent du mélange de caoutchouc constituant la bande de roulement. Ce matériau présente notamment une adhérence sur sol mouillé bien supérieure à l'adhérence sur sol mouillé du mélange de caoutchouc. Ceci permet d'améliorer très sensiblement les performances en régime de virage sur sol mouillé.

Un mode de fabrication de cette bande de roulement est notamment divulgué dans le document WO 2006069912. Selon ce mode de fabrication, dans une première étape, il est prévu d'injecter sous forme d'un ou plusieurs inserts le matériau destiné à constituer une couche de recouvrement dans l'ébauche crue à l'aide d'une buse d'injection. Le ou les inserts sont ensuite mis en forme, dans une seconde étape, par des cordons d'un moule de vulcanisation pour recouvrir tout ou partie des parois des rainures moulées par ces cordons.

Ce mode de fabrication connaît quelques limites, en particulier pour obtenir des moulages de précision. En effet au cours de sa mise en forme, l'insert subi un effort de cisaillement important de la part du cordon en vue de transformer cet insert en une couche d'épaisseur réduite. Cet effort de cisaillement peut générer des fissures au sein de l'insert ce qui rend plus difficile la maîtrise des mouvements du matériau composant cet insert. La forme et l'épaisseur de la couche de recouvrement ainsi formée peuvent alors être aléatoires. Les avantages apportés par la couche supplémentaire sur le fonctionnement du pneumatique sont alors réduits.

De plus dans ce mode de fabrication, il est nécessaire de faire correspondre les inserts avec les cordons. Ceci rend alors plus complexe la fabrication de la bande de roulement.

Il existe donc un besoin pour améliorer la mise en place d'une couche de recouvrement sur des parois de rainures d'une bande de roulement d'un pneumatique.

DEFINITIONS

Par « pneumatique », on entend tous les types de bandages élastiques soumis à une pression interne ou non.

Par « ébauche crue » d'un pneumatique, on entend une superposition d'une pluralité de produits semifinis caoutchouteux présents sous forme de bandelettes ou de feuilles, renforcées ou non. L'ébauche crue est destinée à être vulcanisée dans un moule pour obtenir le pneumatique.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement », on entend la surface formée par les points de la bande de roulement du pneumatique qui entrent en contact avec la chaussée lorsque le pneumatique roule.

Par « moule », on entend un ensemble d'éléments moulants séparés qui, par rapprochement relatif, permettent de délimiter un espace de moulage toroïdal.

Par « élément moulant » d'un moule, on entend une partie d'un moule. Un élément moulant est par exemple un segment de moule.

Par « surface de moulage » d'un élément moulant, on entend la surface du moule destinée à mouler la surface de la bande de roulement du pneumatique.

Par « lame » d'un élément moulant, on entend une protubérance faisant saillie à partir de la surface de moulage. Parmi les lames, on distingue des lamelles comportant une largeur inférieure à 2 mm et des cordons comportant une largeur supérieure ou égale à 2 mm. Les lamelles sont destinées à mouler des incisions dans la bande de roulement du pneumatique, c'est-à-dire des découpures qui se ferment au moins en partie dans l'aire de contact du pneumatique avec le sol. Les cordons sont destinés à mouler des rainures dans la bande de roulement, c'est-à-dire des découpures qui ne ferment pas dans l'aire de contact du pneumatique avec le sol.

Par « lame comportant une extrémité arrondi », on entend que l'extrémité de la lame est bombée.

Par « hauteur de la lame, respectivement de l'arête », on entend la distance entre la surface de moulage du moule et l'extrémité de la lame, respectivement de l'arête.

Par « angle aigu », on entend un angle inférieur à 90°.

RESUME DE L'INVENTION

L'invention concerne un élément moulant d'un moule pour le moulage et la vulcanisation d'une bande de roulement d'un pneumatique, cette bande de roulement comprenant une surface de roulement destinée à venir en contact avec un sol au cours d'un roulage du pneumatique. Comme défini dans la revendication 1, l'élément moulant comporte une surface de moulage destinée à mouler une partie de la surface de roulement du pneumatique et une lame de longueur L et de hauteur H destinée à mouler une incision ou une rainure dans la bande de roulement. Cette lame comporte une extrémité arrondie s'étendant dans la longueur de lame selon une direction d'extension. L'élément moulant comprend en outre deux moyens de découpe disposés de part et d'autre de la lame à une certaine distance de cette lame. Chaque moyen de découpe comporte une arête s'étendant selon la direction d'extension, cette arête formant un angle aigu dans un plan de coupe perpendiculaire à cette direction d'extension, la hauteur de cette arête étant supérieure ou égale à la hauteur de la lame.

Les moyens de découpe sont aptes à découper une couche de recouvrement recouvrant une ébauche crue. La lame va quant à elle mouler une découpure dans la bande de roulement et va en même temps guider une partie de la couche de recouvrement dans la découpure ainsi moulée.

Des formes préférentielles de l'invention sont définies dans les revendications dépendantes. Dans une variante de réalisation, l'angle de l'arête est inférieur ou égal à 60°.

On améliore ainsi la capacité de coupe des moyens de découpe.

Dans un mode de réalisation préférentiel, l'angle de l'arête est inférieur ou égal à 35°.

On améliore ainsi encore davantage la capacité de coupe des moyens de découpe.

Dans un autre mode de réalisation préférentiel, l'angle de l'arête est inférieur ou égal à 20°

On améliore ainsi encore davantage la capacité de coupe des moyens de découpe.

Dans une variante de réalisation, la lame a un profil de longueur Lp présentant une symétrie selon un axe de symétrie perpendiculaire à la surface de moulage, cet axe de symétrie intersectant le profil de la lame au niveau de l'extrémité de cette lame pour définir deux sous-profils. Pour chaque moyen de coupe, la distance entre l'arête de ce moyen de coupe et l'axe de symétrie du profil est inférieure ou égale à la longueur du sous-profil adjacent à ce moyen de coupe.

En maîtrisant la disposition des moyens de découpe par rapport à la lame, on s'assure de limiter la présence de matériau de la couche de recouvrement sur la surface de la bande de roulement, une grande partie de ce matériau se retrouvant dans la découpure. On améliore en conséquence l'esthétique globale du pneumatique, le matériau constituant la couche recouvrement pouvant avoir une couleur et une texture différente du matériau caoutchoutique constituant la bande de roulement.

Dans une variante de réalisation, la distance entre l'arête et l'axe de symétrie est inférieure ou égale à 98% de la longueur de ce sous-profil.

Lors de la découpe de la couche de recouvrement, il se peut que celle-ci s'allonge. En choisissant une distance entre l'arête et l'axe de symétrie un peu inférieure à 100%, on s'assure que la partie découpée de la couche de recouvrement sera bien en totalité dans la découpure et pas sur la surface de la bande de roulement.

Dans une variante de réalisation, la distance entre l'arête et l'axe de symétrie est supérieure ou égale à la moitié de la longueur de ce sous-profil.

On s'assure ainsi qu'une quantité minimale de matériau constituant la couche de recouvrement sera bien présente dans la découpure.

Dans une variante de réalisation, l'extrémité de la lame comporte un renflement.

On améliore alors la mise en place du matériau constituant la couche de recouvrement sur les parois des rainures.

Dans une variante de réalisation, les moyens de découpe comportent deux branches, chaque branche comprenant une arête formant un angle aigu.

Au cours du démoulage, chaque moyen de découpe laisse une découpure sur la surface de la bande de roulement. Cette découpure vient s'ajouter à la découpure formée par la lame. Les moyens de découpe viennent ainsi augmenter le taux d'entaillement à la surface de la bande de roulement. En prévoyant un moyen de découpe comportant deux arêtes de découpe, on peut venir placer du matériau de la couche de recouvrement dans deux découpures moulées par deux lames encadrant ce moyen de découpe et ceci sans augmenter le taux d'entaillement à la surface de la bande de roulement.

Dans une variante de réalisation, l'extrémité de la lame comporte une pluralité de plots répartis dans la longueur de cette lame.

Ces plots permettent de s'assurer que la partie découpée de la couche de recouvrement va bien adhérer avec l'extrémité de la lame lors de l'enfoncement de cette lame dans l'ébauche crue. On limite ainsi tout mouvement relatif de la lame par rapport à la partie découpée de la couche de recouvrement.

Un autre objet de l'invention concerne un moule pour le moulage et la vulcanisation d'une bande de roulement d'un pneumatique, ce moule comportant une pluralité d'éléments moulants tels que décrits ci-dessus.

BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

- la **figure 1** représente schématiquement un élément moulant conforme à l'invention ;

- la **figure 2a** illustre une première étape de moulage par l'élément moulant de la **figure 1,** dans laquelle les moyens de découpe sont en contact au niveau de leur extrémité avec la couche de recouvrement recouvrant l'ébauche crue ;

- la **figure 2b** illustre une seconde étape de moulage dans laquelle la lame est en contact avec la couche de recouvrement ;

- la **figure 2c** illustre une troisième étape de moulage dans laquelle les moyens de découpe et la lame sont entièrement positionnés dans l'ébauche crue ;

- la **figure 2d** représente schématiquement une partie de la bande de roulement d'un pneumatique suite aux étapes de moulage des **figures 2a-2c** ;

- la **figure 3** est une vue en perspective représentant schématiquement une lame d'un élément moulant de la figure 1 comportant sur une extrémité une pluralité de protubérances ;

- la **figure 4** représente schématiquement une variante d'une lame d'un élément moulant de la **figure 1** dans laquelle la lame comporte un renflement au niveau d'une extrémité ;

- la **figure 5** représente une variante de l'élément moulant de la **figure 1** dans laquelle cet élément moulant comporte une pluralité de lames disposées entre les moyens de découpe.

Dans la description qui va suivre, des éléments sensiblement identiques ou similaires seront désignés par des références identiques.

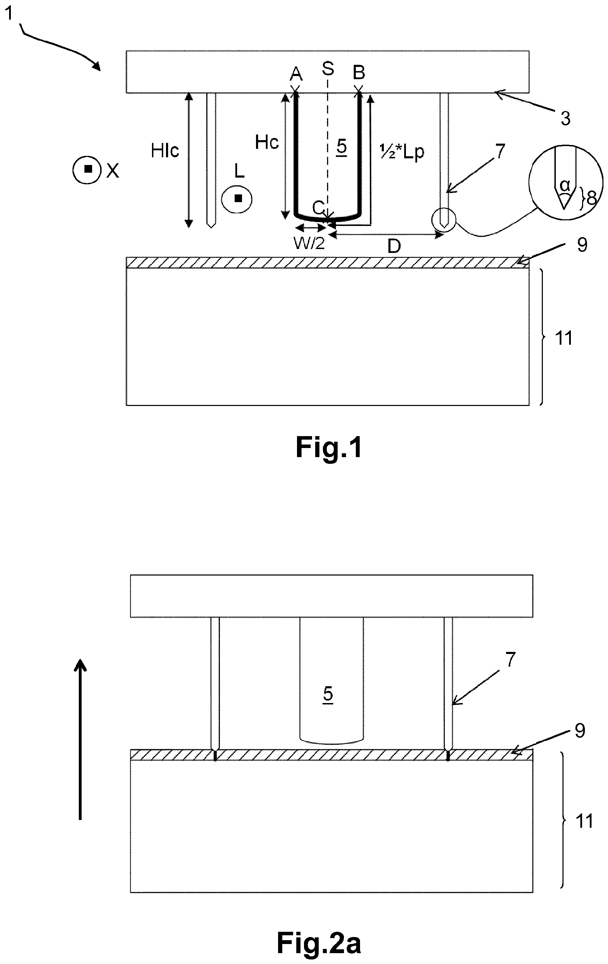

La **figure 1** représente un élément moulant 1 conforme à l'invention.

Plus particulièrement, l'élément moulant 1 comprend une surface de moulage 3 destinée à mouler une partie de la surface de roulement d'un pneumatique. L'élément moulant 1 comporte également des lames 5 dont une seule est ici représentée pour faciliter la compréhension de l'invention. La lame est ici un cordon 5 destiné à mouler une rainure dans la bande de roulement du pneumatique. Par « rainure » dans une bande de roulement, on entend une découpure dans cette bande dont la largeur, c'est-à-dire la distance séparant deux parois latérales de cette rainure, est supérieure à 2 mm. Le cordon 5 s'étend en hauteur à partir de cette surface de moulage 3. Le cordon 5 s'étend également en longueur selon une direction d'extension X en faisant saillie à partir de la surface de moulage 3. Dans le moule, cette direction peut être une direction circonférentielle qui suit la circonférence du moule. En variante, la direction d'extension est une direction transversale perpendiculaire à la direction circonférentielle du moule. Dans une autre variante, cette direction d'extension est une direction oblique formant un angle non nul avec la direction circonférentielle et la direction transversale du moule.

La **figure 1** représente l'élément moulant 1 vu dans un plan de coupe perpendiculaire à la direction d'extension X. Dans ce plan de coupe, le cordon 5 présente une section ayant une symétrie par rapport à un axe de symétrie S. L'axe de symétrie S s'étend ici dans la hauteur Hc du cordon 5 et il sépare ce cordon 5 en deux demi-cordons de largeur W/2.

La section du cordon a ici une forme rectangulaire. Par « forme rectangulaire », on entend que la face supérieure du cordon est perpendiculaire aux faces latérales de ce cordon, c'est-à-dire que les faces latérales du cordon font avec la face supérieure de ce cordon un angle compris entre 85° et 95°.

L'invention englobe également le cas où les zones de raccord entre les faces latérales du cordon et la face supérieure de ce cordon sont arrondies ainsi que le cas où les zones de raccord entre les faces latérales du cordon et l'embase sont également arrondies.

Dans des variantes de réalisation complémentaires, la section du cordon peut prendre une autre forme qu'une forme rectangulaire, telle qu'une forme carrée, une forme triangulaire, etc...

On notera également que la section du cordon 5 présente, entre deux points d'intersection A et B du cordon 5 avec la surface de moulage 3, un profil représenté en traits gras sur la **figure 1.** Ce profil a une longueur de profil Lp telle que Lp=2*(Hc+W/2), c'est-à-dire que la longueur de profil Lp correspond à deux fois la hauteur Hc du cordon 5 auquel on ajoute la largeur W de ce cordon.

Dans l'exemple de la **figure 1,** les points d'intersection A et B sont facilement déterminables, les parois latérales du cordon 5 étant perpendiculaires à la surface de moulage 3. En variante, dans le cas où les parois latérales du cordon sont raccordées à la surface de moulage 3 par deux zones de raccordement arrondies formant deux arcs de cercle, les points d'intersection A et B correspondent respectivement à l'intersection des arcs de cercle avec des droites passant par les centres des arcs de cercle et séparant ces arcs en deux ½ arcs identiques.

L'élément moulant 1 de la **figure 1** présente également deux moyens de découpe 7 disposés de part et d'autre du cordon 5. Ces moyens de découpe s'étendent dans leur longueur selon une direction parallèle à la direction longitudinale X du cordon 5. Par « direction parallèle », on entend que la direction d'extension des moyens de découpe forme un angle compris entre -5° et +5° avec la direction d'extension longitudinale X du cordon. La hauteur H1c des moyens de découpe est au moins égale à la hauteur Hc du cordon.

Chaque moyen de découpe comporte une extrémité 8 apte à découper une couche 9 de recouvrement recouvrant une ébauche crue 11 d'un pneumatique. Plus particulièrement, chaque moyen de découpe comporte à son extrémité une arête de découpe (représentée par une pointe sur la **figure** 1). Cette arête de découpe présente dans le plan de la **figure 1,** un angle α inférieur ou égal à 60° (voir le médaillon associé à la **figure 1** constituant un agrandissement de l'extrémité d'un des deux moyens de découpe 7). Dans un mode de réalisation préférentiel, l'angle α est inférieur ou égal à 35°. Dans un autre mode de réalisation préférentiel, l'angle α est inférieur ou égal à 20°.

On notera que cette arête de découpe peut avoir été préalablement durcie pour améliorer sa tenue mécanique dans le temps. Par exemple, l'arête de découpe peut avoir été durcie lors d'un traitement thermique particulier. En variante, il est possible de prévoir que le matériau constituant l'arête de découpe soit plus résistant que le reste de l'élément moulant.

On notera également que les moyens de découpe 7 sont disposés dans l'élément moulant 1 de sorte que la distance D entre chaque extrémité des moyens de découpe et l'axe de symétrie S de la section du cordon 5 est inférieure ou égale à la moitié de la longueur Lp du profil de la section, telle que D=Hc+W/2. Dit autrement, l'axe de symétrie S intersecte le profil du cordon 5 en un point C pour définir deux sous-profils. Un premier sous-profil correspond au segment A-C et un second sous-profil correspond au segment B-C. Pour chaque moyen de coupe, la distance entre l'arête de ce moyen de coupe et l'axe de symétrie S est inférieure ou égale à la longueur du sous-profil adjacent à ce moyen de coupe, c'est-à-dire le sous-profil appartenant au demi-cordon le plus proche du moyen de coupe. Dans l'exemple de la **figure 1,** le sous-profil le plus proche du moyen de coupe 7 est le sous-profil correspondant au segment B-C.

Les **figures 2a à 2c** illustrent plus en détails les différentes étapes pour la mise en place d'une partie découpée de la couche de recouvrement dans une rainure de la bande de roulement.

La **figure 2a** divulgue notamment une première étape dans laquelle l'élément moulant 1 et l'ébauche crue 11 se rapprochent. Ce rapprochement, est par exemple, initié par une membrane (non représentée) dans le moule. Cette membrane sous l'action d'une quantité de vapeur mise sous pression se gonfle et vient repousser l'ébauche crue vers l'élément moulant 1. Plus particulièrement, la **figure 2a** présente l'instant où les moyens de découpe 7 viennent découper la couche de recouvrement 9. Cette étape de découpe est facilitée par l'action des arêtes coupantes des moyens de découpe.

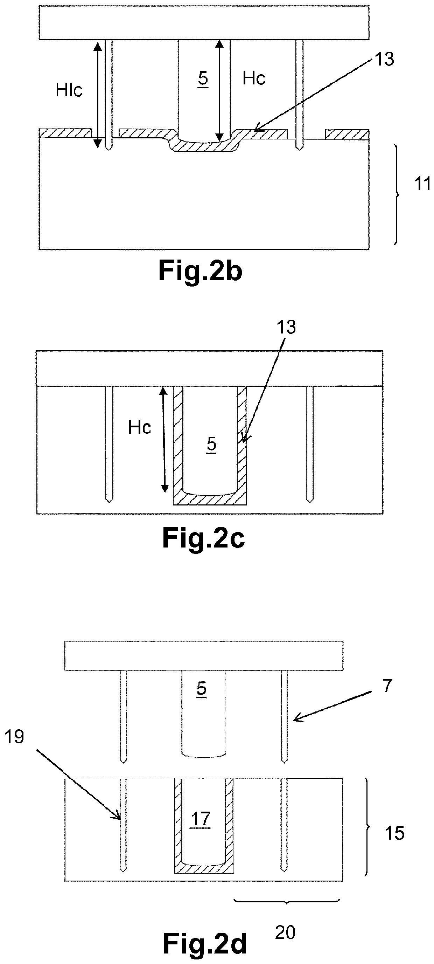

La **figure 2b** illustre une seconde étape dans laquelle le cordon 5 vient enfoncer l'ébauche crue 11. Plus particulièrement, dans cette étape le cordon 5 vient en contact contre une partie 13 découpée de la couche de recouvrement. Le cordon 5 vient ainsi entraîner cette partie 13 dans la profondeur de l'ébauche crue 11.

On notera ici que la hauteur H1c des moyens de découpe 7 est supérieure à la hauteur Hc du cordon 5. Ainsi l'étape de découpe de la **figure 2a** est antérieure à l'étape d'enfoncement de l'ébauche crue 11 par le cordon 5. En variante, il est possible de prévoir que la hauteur H1c des moyens de découpe 7 soit identique à la hauteur Hc du cordon 5. Dans ce cas l'étape de la **figure 2a** et l'étape de la **figure 2b** ont lieu au même instant.

La **figure 2c** illustre une troisième étape dans laquelle le cordon 5 vient enfoncer l'ébauche crue sur toute sa hauteur Hc. L'ensemble de la partie 13 de la couche de recouvrement se retrouve alors dans l'ébauche crue. Une fois cette étape réalisée, il est alors possible de réaliser la vulcanisation de l'ébauche crue, c'est-à-dire le passage de l'état plastique à l'état élastique du matériau caoutchoutique constituant l'ébauche crue. Cette étape de vulcanisation peut modifier également la structure interne de la couche de recouvrement.

La **figure 2d** représente le résultat des différentes étapes de moulage et de vulcanisation de l'ébauche crue illustrée aux **figures 2a** à **2c**. La partie de la bande de roulement 15 ainsi obtenue comprend une rainure 17 obtenue par un moulage de caoutchouc autour du cordon 5 et deux incisions 19 obtenues par un moulage de caoutchouc autour des deux moyens de découpe 7. On notera ici que l'ensemble des parois de la rainure, c'est-à-dire les parois latérales et la paroi de fond encadrée par les parois latérales, sont recouvertes par la partie découpée 13 de la couche de recouvrement.

En fonction du type de matériau constituant la couche de recouvrement, on peut donner au bloc 20 délimité en partie par la rainure 17 des propriétés spécifiques. Ainsi, dans le cas où on cherche à améliorer les performances d'adhérence de la bande de roulement sur neige, on peut utiliser un matériau dans la couche de recouvrement présentant un module dynamique de cisaillement G* soumis à une contrainte maximale alternée de 0,7 MPa, à une fréquence de 10 Hz et à une température de -10°C supérieur à 60 MPa, de préférence supérieur à 200 MPa.

Dans le présent document, les termes « module élastique G' » et « module visqueux G" » désignent des propriétés dynamiques bien connues de l'homme du métier. Ces propriétés sont mesurées sur un viscoanalyseur de type Metravib VA4000 sur des éprouvettes moulées à partir de compositions crues. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre de l'éprouvette est de 10 mm (elle a donc une section circulaire de 78.5 mm$^2$), l'épaisseur de chacune des portions de composition caoutchouteuse est de 2 mm, ce qui donne un ratio « diamètre/épaisseur » de 5 (contrairement à la norme ISO 2856, mentionnée dans la norme ASTM, paragraphe X2.4, qui préconise une valeur de 2). On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0.7 MPa), symétriquement autour de sa position d'équilibre. La mesure est réalisée au cours d'une rampe de température croissante de 1,5°C par minute, depuis une température Tmin inférieure à la température de transition vitreuse (Tg) du matériau, jusqu'à une température Tmax qui peut correspondre au plateau caoutchoutique du matériau. Avant de commencer le balayage, on stabilise l'échantillon à la température Tmin pendant 20 min pour avoir une température homogène au sein de l'échantillon. Le résultat exploité est le module élastique de cisaillement dynamique (G') et le module visqueux de cisaillement (G") aux températures choisies (en l'occurrence, 0°, 5° et 20°C). Le « module complexe » G* se définit comme la valeur absolue de la somme complexe des modules élastique

G' et visqueux $G'' : G^{*} = \sqrt{(G'^{2} + G''^{2})}$ .

Dans une variante de réalisation, le matériau élastomère de la couche de recouvrement comprend une composition à base d'au moins un élastomère diénique très fortement chargé en souffre, tel que de l'ébonite.

Dans une autre variante de réalisation, la couche de recouvrement comprend un assemblage de fibres, par exemple un assemblage tridimensionnel de fibres formant un feutre. Les fibres de ce feutre peuvent être choisies dans le groupe des fibres textiles, des fibres minérales et de leur mélange. On notera également que les fibres de ce feutre peuvent être choisies parmi des fibres textiles d'origine naturelle, par exemple, dans le groupe des fibres de soie, de coton, de bambou, de cellulose, de laine et de leurs mélanges.

Dans une autre variante de réalisation, le matériau élastomère de la couche de recouvrement comprend une composition à base d'au moins un polymère thermoplastique, tel que du polyéthylène téréphtalate (PET). Un tel polymère peut présenter un module de Young supérieur à 1 GPa.

On notera que la couche de recouvrement peut être monocouche. En variante, la couche de recouvrement peut comprendre plusieurs couches de compositions différentes. Par exemple, le matériau constituant la partie inférieure de la couche de recouvrement en contact avec l'ébauche crue peut être sélectionné de sorte à améliorer le glissement de la couche de recouvrement sur l'ébauche crue lorsque le cordon entraîne cette couche de recouvrement dans la profondeur de l'ébauche. Le matériau constituant la couche inférieure peut être, par exemple, du coton ou du caoutchouc pré-vulcanisé. De la même manière, le matériau constituant la partie supérieure de la couche de recouvrement est sélectionné pour les propriétés que l'on souhaite donner à la bande de roulement, par exemple, une meilleure adhérence sur un sol enneigé.

Dans une autre variante de réalisation, le matériau peut être un matériau bi-couche avec une couche en textile (tissée ou non-tissée) dont la fonction est d'entraîner lors du moulage un matériau visqueux. Dans ce cas, le matériau textile fait partie de la couche supérieure en contact avec l'élément moulant.

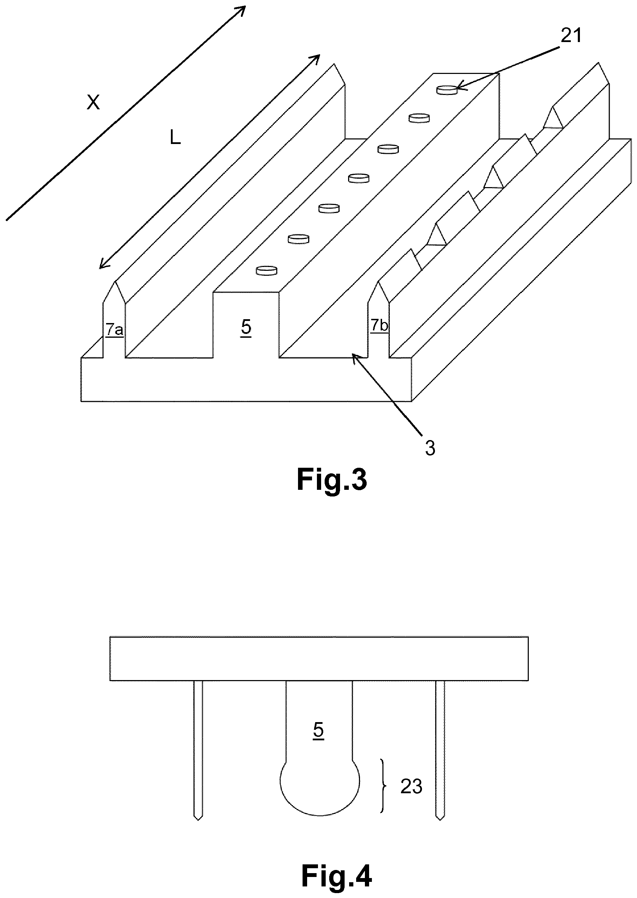

Afin d'améliorer la mise en place de la partie découpée de la couche de recouvrement dans la rainure, il est proposé à la **figure 3** de prévoir des protubérances 21 faisant saillie à partir d'une extrémité du cordon 5. Ces protubérances vont empêcher des mouvements relatifs de la partie découpée de la couche de recouvrement par rapport au cordon lorsque le cordon est en contact avec cette partie découpée. Ainsi, on s'assure que la couche de recouvrement sera bien entraînée par le cordon dans la profondeur de l'ébauche crue, ce qui permet de limiter les risques d'un surplus de matériau constituant cette couche sur la surface de la bande de roulement à l'extérieur de la rainure.

Les protubérances 21 se présentent ici sous la forme de cylindres de faible hauteur par rapport à la hauteur du cordon. Ces cylindres ont, par exemple, une hauteur inférieure à 10% de la hauteur du cordon. Ces protubérances sont ici alignées dans la longueur du cordon. En variante, il peut exister un certain décalage parmi ces protubérances.

Cette **figure 3** représente également schématiquement un premier moyen de découpe 7a et un second moyen de découpe 7b. Dans le premier moyen de découpe 7a, l'arête s'étend de manière continue selon la direction d'extension X. La couche de recouvrement est donc entièrement découpée selon une ligne de découpe. Dans le second moyen de découpe 7b, l'arête est discontinue. La couche de recouvrement est donc partiellement découpée selon une ligne de découpe. Lorsque le cordon va venir appuyer sur la couche de recouvrement, les parties non découpées de cette ligne de découpe vont se déchirer permettant alors la mise en place d'une partie de la couche de recouvrement dans la rainure.

La **figure 4** représente une variante du cordon de l'élément moulant de la **figure 1.** Dans cette variante, le cordon 5 comporte à son extrémité un renflement 23 (« bulge » en anglais). Avec ce renflement, on améliore la mise en place de la couche de recouvrement sur les parois de la rainure.

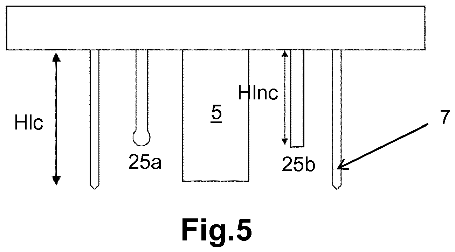

Dans une variante de réalisation illustrée à la **figure 5,** on intercale entre les moyens de découpe 7 et le cordon 5 une ou plusieurs autres lames 25a, 25b. Ces lames ont une hauteur H1nc inférieure à la hauteur H1c des moyens de découpe de sorte à ne pas perturber l'opération de découpe de la couche de recouvrement. Ces lames supplémentaires peuvent avoir des formes diverses, par exemple elles peuvent comporter un renflement au niveau de leur extrémité afin de mouler des canaux internes à la bande de roulement. En variante, elles peuvent présenter des formes en zigzag.

L'invention couvre également un moule comportant une pluralité d'éléments moulants tels que décrits dans les différentes variantes ci-dessus.

L'invention n'est pas limitée aux exemples décrits et représentés et diverses modifications peuvent y être apportées sans sortir de son cadre.

Par exemple, le cordon de la **figure 1** peut présenter une toute autre forme qu'une forme rectangulaire, telle qu'une forme hexagonale, triangulaire, en losange ou autres.

De la même manière, le moyen de découpe peut comporter au moins deux branches ayant chacune une arête. Ces branches peuvent être rectilignes ou curvilignes, elles peuvent également se rejoindre au niveau d'un tronc commun appartenant au moyen de découpe.

Dans une variante de réalisation, il est possible de prévoir que le moyen de découpe possède les dimensions d'un cordon. Ce moyen de découpe comprend alors à son extrémité une ou plusieurs arêtes de découpe faisant saillie à partir de son extrémité.

Dans une autre variante de réalisation, il est possible de prévoir que la lame possède les dimensions d'une lamelle se terminant à son extrémité par un renflement.

Toutes les combinaisons entre les formes des moyens de découpe et la forme de la lame sont possibles.

Dans une autre variante de réalisation, la lame présente une symétrie partielle. Par exemple, la lame comporte un ½ renflement au niveau de son extrémité créant une dissymétrie. Dans ce cadre, il est possible de déterminer un axe de symétrie pour la partie symétrique de la lame. Il est alors possible également de définir deux sous-profils par l'intersection de l'axe de symétrie avec le profil de la lame. Du fait de la dissymétrie au niveau de l'extrémité de la lame, ces deux sous-profils présentent des longueurs différentes.

## Revendications

1. Elément moulant d'un moule pour le moulage et la vulcanisation d'une bande de roulement d'un pneumatique, cette bande de roulement comprenant une surface de roulement destinée à venir en contact avec un sol au cours d'un roulage dudit pneumatique, cet élément moulant (1) comportant une surface de moulage (3) destinée à mouler une partie de la surface de roulement du pneumatique et une lame (5) de longueur L et de hauteur Hc destinée à mouler une incision ou une rainure dans la bande de roulement, cette lame comportant une extrémité arrondie s'étendant dans la longueur de lame selon une direction d'extension X **caractérisé en ce que** l'élément moulant comprend deux moyens de découpe (7) disposés de part et d'autre de la lame à une certaine distance de cette lame et **en ce que** chaque moyen de découpe (7) comporte une arête (8) s'étendant selon la direction d'extension, cette arête formant un angle aigu $\alpha$ dans un plan de coupe perpendiculaire à cette direction d'extension X, la hauteur H1c de cette arête étant supérieure ou égale à la hauteur de la lame Hc.

2. Elément moulant selon la revendication 1, **caractérisé en ce que** l'angle $\alpha$ de l'arête (8) est inférieur ou égal à 60°.

3. Elément moulant selon l'une quelconque des revendications 1 ou 2, **caractérisé en ce que** l'angle $\alpha$ de l'arête (8) est inférieur ou égal à 35°.

4. Elément moulant selon l'une quelconque des revendications 1 à 3, **caractérisé en ce que** l'angle $\alpha$ de l'arête (8) est inférieur ou égal à 20°.

5. Elément moulant selon l'une quelconque des revendications 1 à 4, dans lequel la lame (5) a un profil de longueur Lp présentant une symétrie selon un axe de symétrie (S) perpendiculaire à la surface de moulage (3), cet axe de symétrie intersectant le profil de la lame au niveau de l'extrémité de cette lame pour définir deux sous-profils (A-C, B-C), **caractérisé en ce que** pour chaque moyen de coupe, la distance (D) entre l'arête (8) de ce moyen de coupe et l'axe de symétrie (S) du profil est inférieure ou égale à la longueur (1/2*Lp) du sous-profil adjacent à ce moyen de découpe.

6. Elément moulant selon la revendication 5, **caractérisé en ce que** la distance (D) entre l'arête (8) et l'axe de symétrie (S) est égale à 98% de la longueur de ce sous-profil.

7. Elément moulant selon la revendication 6, **caractérisé en ce que** la distance (D) entre l'arête (8) et l'axe de symétrie (S) est supérieure ou égale à la moitié de la longueur de ce sous-profil.

8. Elément moulant selon l'une quelconque des revendications 1 à 7, **caractérisé en ce que** l'extrémité de la lame comporte un renflement.

9. Elément moulant selon l'une quelconque des revendications 1 à 8, **caractérisé en ce que** le moyen de découpe comporte au moins deux branches, chaque branche comprenant une arête formant un angle aigu.

10. Elément moulant selon l'une quelconque des revendications 1 à 8, **caractérisé en ce que** le moyen de découpe a l'épaisseur d'un cordon, ce cordon comportant sur une extrémité au moins une protubérance formant une arête.

11. Elément moulant selon l'une quelconque des revendications 1 à 9, **caractérisé en ce que** l'extrémité de la lame comporte une pluralité de plots (21) répartis dans la longueur de cette lame.

12. Moule pour le moulage et la vulcanisation d'une bande de roulement d'un pneumatique, ce moule comportant une pluralité d'éléments moulants selon l'une quelconque des revendications 1 à 11.

**Patentansprüche**

1. Formelement für eine Form zum Formen und Vulkanisieren eines Laufstreifens eines Luftreifens, wobei dieser Laufstreifen eine Laufoberfläche aufweist, die dazu bestimmt ist, während des Rollens des Luftreifens mit einem Boden in Kontakt zu gelangen, wobei dieses Formelement (1) eine Formoberfläche (3) aufweist, die dazu bestimmt ist, einen Teil der Laufoberfläche des Luftreifens zu formen, und eine Lamelle (5) mit Länge L und Höhe Hc aufweist, die dazu bestimmt ist, in dem Laufstreifen einen Einschnitt oder eine Rille zu formen, wobei diese Lamelle ein abgerundetes Ende aufweist, das sich in Längsrichtung der Lamelle längs einer Erstreckungsrichtung X erstreckt, **dadurch gekennzeichnet, dass** das Formelement zwei Schneidmittel (7) umfasst, die beiderseits der Lamelle in einem bestimmten Abstand von dieser Lamelle angeordnet sind und dass jedes Schneidmittel (7) eine Kante (8) aufweist, die sich längs der Erstreckungsrichtung erstreckt, wobei diese Karte in einer Schnittebene senkrecht zu dieser Erstreckungsrichtung X einen spitzen Winkel α bildet, wobei die Höhe H1c diese Kante größer oder gleich der Höhe Hc der Lamelle ist.

2. Formelement nach Anspruch 1, **dadurch gekennzeichnet, dass** der Winkel α der Kante (8) kleiner oder gleich 60° ist.

3. Formelement nach einem der Ansprüche 1 oder 2, **dadurch gekennzeichnet, dass** der Winkel α der Kante (8) kleiner oder gleich 35° ist.

4. Formelement nach einem der Ansprüche 1 oder 2, **dadurch gekennzeichnet, dass** der Winkel α der Kante (8) kleiner oder gleich 20° ist.

5. Formelement nach einem der Ansprüche 1 bis 4, wobei die Lamelle (5) ein Längsprofil Lp besitzt, das längst eine Symmetrieachse (S) senkrecht zu der Formoberfläche (3) symmetrisch ist, wobei diese Symmetrieachse das Profil der Lamelle auf Höhe des Endes dieser Lamelle schneidet, um zwei Unterprofile (A-C, B-C) zu definieren, **dadurch gekennzeichnet, dass** für jedes Element der Abstand (D) zwischen der Kante (8) dieses Schneidmittels und der Symmetrieachse (S) des Profils kleiner oder gleich der Länge (1/2 × Lp) des Unterprofils benachbart zu diesem Schneidmittel ist.

6. Formelement nach Anspruch 5, **dadurch gekennzeichnet, dass** der Abstand (D) zwischen der Kante (8) und der Symmetrieachse (S) 98 % der Länge dieses Unterprofils beträgt.

7. Formelement nach Anspruch 6, **dadurch gekennzeichnet, dass** der Abstand (D) zwischen der Kante (8) und der Symmetrieachse (S) größer oder gleich der Hälfte der Länge dieses Unterprofils ist.

8. Formelement nach einem der Ansprüche 1 bis 7, **dadurch gekennzeichnet, dass** das Ende der Lamelle eine Erhebung aufweist.

9. Formelement nach einem der Ansprüche 1 bis 8, **dadurch gekennzeichnet, dass** das Schneidelement wenigstens zwei Schenkel aufweist, wobei jeder Schenkel eine Kante aufweist, die einen spitzen Winkel bildet.

10. Formelement nach einem der Ansprüche 1 bis 8, **dadurch gekennzeichnet, dass** das Schneidmittel die Dicke eines Wulstes besitzt, wobei dieser Wulst an einem Ende wenigstens einen Vorsprung, der eine Kante bildet, aufweist.

11. Formelement nach einem der Ansprüche 1 bis 9, **dadurch gekennzeichnet, dass** das Ende der Lamelle mehrere Höcker (21) aufweist, die in Längsrichtung dieser Lamelle verteilt sind.

12. Form zum Formen und Vulkanisieren eines Laufstreifens eines Luftreifens, wobei diese Form mehrere Formelemente nach einem der Ansprüche 1 bis 11 umfasst.

**Claims**

1. Moulding element of a mould for moulding and vulcanizing a tyre tread, this tread comprising a tread surface intended to come into contact with the ground when the said tyre is running, this moulding element (1) comprising a moulding surface (3) intended to mould part of the tyre tread surface and a blade (5) of length L and of height Hc intended to mould a sipe or a groove in the tread, this blade comprising a rounded end extending along the length of the blade in a direction of extension X, **characterized in that** the moulding element comprises two cutting means (7) positioned on either side of the blade at a certain distance from this blade, and **in that** each cutting means (7) comprises a cutting edge (8) extending in the direction of extension, this cutting edge making an acute angle α in a cutting plane perpendicular to this direction of extension X, the height Hlc of this cutting edge being greater than or equal to the height of the blade Hc.

2. Moulding element according to Claim 1, **characterized in that** the angle α of the cutting edge (8) is less than or equal to 60°.

3. Moulding element according to either one of Claims 1 and 2, **characterized in that** the angle $\alpha$ of the cutting edge (8) is less than or equal to 35°.

4. Moulding element according to any one of Claims 1 to 3, **characterized in that** the angle $\alpha$ of the cutting edge (8) is less than or equal to 20°.

5. Moulding element according to any one of Claims 1 to 4, in which the blade (5) has a profile of length Lp exhibiting symmetry about an axis of symmetry (S) perpendicular to the moulding surface (3), this axis of symmetry intersecting the profile of the blade at the end of this blade to define two sub-profiles (A-C, B-C), **characterized in that**, for each cutting means, the distance (D) between the cutting edge (8) of this cutting means and the axis of symmetry (S) of the profile is less than or equal to the length (½*Lp) of the sub-profile adjacent to this cutting means.

6. Moulding element according to Claim 5, **characterized in that** the distance (D) between the cutting edge (8) and the axis of symmetry (S) is equal to 98% of the length of this sub-profile.

7. Moulding element according to Claim 6, **characterized in that** the distance (D) between the cutting edge (8) and the axis of symmetry (S) is greater than or equal to half the length of this sub-profile.

8. Moulding element according to any one of Claims 1 to 7, **characterized in that** the end of the blade has a bulge.

9. Moulding element according to any one of Claims 1 to 8, **characterized in that** the cutting means comprises at least two branches, each branch comprising a cutting edge forming an acute angle.

10. Moulding element according to any one of Claims 1 to 8, **characterized in that** the cutting means has the thickness of a rib, this rib having on one end at least one protrusion forming a cutting edge.

11. Moulding element according to any one of Claims 1 to 9, **characterized in that** the end of the blade comprises a plurality of pads (21) distributed along the length of this blade.

12. Mould for moulding and vulcanizing a tyre tread, this mould comprising a plurality of moulding elements according to any one of Claims 1 to 11.

**Fig.1**

**Fig.2a**

Hlc

5

Hc

13

11

## Fig.2b

13

Hc

5

## Fig.2c

5

7

19

17

15

20

## Fig.2d

**Fig.3**

**Fig.4**

**Fig.5**

**EP 2 790 905 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4553918 A
- US 3415923 A
- US 3432888 A
- WO 03089257 A
- WO 2006069912 A